# EUROPEAN PATENT APPLICATION

(11) **EP 4 672 011 A1**
(43) Date of publication of application: **31.12.2025**
(21) Application number: 25184706.7
(22) Date of filing: 24.06.2025
(51) Int. Cl.: G06F 15/78, G06F 9/38

(54) **SYSTEMS AND METHODS OF STANDALONE PROCESSING IN MEMORY**

(30) Priority: 28.06.2024 US 202463666105 P; 13.09.2024 US 202463694785 P; 02.04.2025 US 202519098975
(71) Applicant: Samsung Electronics Co., Ltd., Suwon-si, Gyeonggi-do 16677 (KR)
(72) Inventor: NGUYEN, Marie Mai, San Jose, CA, 95134 (US); PITCHUMANI, Rekha, San Jose, CA, 95134 (US); KI, Yang Seok, San Jose, CA, 95134 (US)
(74) Representative: Kuhnen & Wacker Patent- und Rechtsanwaltsbüro PartG mbB

(57) **Abstract**

Provided are systems, methods, and apparatuses for a standalone architecture for processing in memory. In one or more examples, the systems, devices, and methods include assigning, via application code of a host of a memory system in package, a kernel sub grid of a kernel grid to a stack of memory dies; assigning, via a microcontroller of a base die of the stack, execution of a first thread block of the kernel sub grid to a first processor element of the stack; assigning, via the microcontroller, execution of a second thread block of the kernel sub grid to a second processor element of the stack; executing threads of the first thread block on the first processor element; and executing threads of the second thread block on the second processor element.

## Description

### TECHNICAL FIELD

The disclosure relates generally to memory systems. In particular, the subject matter relates to a standalone architecture for processing in memory.

### BACKGROUND

The present background section is intended to provide context only, and the disclosure of any concept in this section does not constitute an admission that said concept is prior art.

High-Performance Computing (HPC) integrates systems administration (e.g., network and security knowledge) and parallel programming into a multidisciplinary field that combines digital electronics, computer architecture, system software, programming languages, algorithms and computational techniques. HPC technologies include the tools and systems used to implement and create high performance computing systems. HPC may be configured to perform large-scale tasks that would be too difficult for a single computer to handle.

### SUMMARY

In various embodiments, the systems and methods described herein include systems, methods, and apparatuses for a standalone architecture for processing in memory (e.g., including a standalone high-bandwidth memory (HBM) architecture and programming model). In some aspects, the techniques described herein relate to a system in package, the system in package including: stacked memory modules interconnected via die-to-die (D2D) connections, a stacked memory module of the stacked memory modules including: a base die that includes: a microcontroller; a plurality of processor elements; a shared memory to share, between the plurality of processor elements, data that is associated with processes executed by the plurality of processor elements; and an interconnect that connects the microcontroller to the plurality of processor elements, the shared memory, and at least one memory die stacked on top of the base die.

In some aspects, the techniques described herein relate to a system in package, wherein: a programming model associated with the stacked memory modules includes a kernel grid that includes multiple kernel sub grids, and a kernel sub grid of the multiple kernel sub grids includes a thread block that includes at least a first group of threads and a second group of threads different from the first group of threads.

In some aspects, the techniques described herein relate to a system in package, wherein a host of the system in package assigns, via application code, the kernel sub grid of the multiple kernel sub grids to the stacked memory module.

In some aspects, the techniques described herein relate to a system in package, wherein the microcontroller of the stacked memory module assigns execution of the thread block of the kernel sub grid to a first processor element of the stacked memory module and assigns execution of a second thread block of the kernel sub grid to a second processor element of the stacked memory module, the second thread block including one or more groups of threads.

In some aspects, the techniques described herein relate to a system in package, wherein a processor element of the plurality of processor elements includes at least one of an instruction memory, a data memory, a unified data instruction memory, a scheduler to assign execution of a group of threads to the processor element, a dispatcher to select a computation unit of the processor element to execute a thread in the group of threads, a register file to store data during computation by the processor element, or an in-order execution pipeline.

In some aspects, the techniques described herein relate to a system in package, wherein the computation unit of the processor element includes at least one of a floating-point unit for floating point operations, an arithmetic logic unit for integer operations, a tensor core for general matrix multiplication, or a load store unit for load commands and store commands.

In some aspects, the techniques described herein relate to a system in package, wherein a first processor element of the plurality of processor elements accesses data placed in the shared memory by a second processor element of the plurality of processor elements.

In some aspects, the techniques described herein relate to a system in package, wherein the interconnect includes a packet-switching interconnect that enables the microcontroller to communicate, via data packets, data or commands to the plurality of processor elements.

In some aspects, the techniques described herein relate to a system in package, wherein the interconnect includes a network on chip (NoC) interconnect.

In some aspects, the techniques described herein relate to a system in package, wherein the system in package includes at least one of: an intra-server interface based on at least one of compute express link or ultra accelerator link; an inter-server interface based on at least one of InfiniBand or ethernet; or a host interface.

In some aspects, the techniques described herein relate to a method including: assigning, via application code of a host of a memory system in package, a kernel sub grid of a kernel grid to a stacked memory module; assigning, via a microcontroller of a base die of the stacked memory module, execution of a first thread block of the kernel sub grid to a first processor element of the stacked memory module; assigning, via the microcontroller, execution of a second thread block of the kernel sub grid to a second processor element of the stacked memory module; executing threads of the first thread block on the first processor element; and executing threads of the second thread block on the second processor element.

In some aspects, the techniques described herein relate to a method, wherein: the kernel sub grid includes the first thread block that includes at least a first group of threads and a second group of threads different from the first group of threads, and the kernel sub grid includes the second thread block that includes at least a third group of threads and a fourth group of threads different from the third group of threads.

In some aspects, the techniques described herein relate to a method, further including: selecting, via a scheduler of the first processor element, to execute the first group of threads in relation to the second group of threads based on the scheduler determining the second group of threads depends on a result of executing the first group of threads.

In some aspects, the techniques described herein relate to a method, further including: selecting, via a dispatcher of the first processor element, one of multiple computation units of the first processor element to execute a thread of the first group of threads based on the dispatcher determining a type of computation associated with the thread, the computation units of the first processor element including at least one of floating-point unit, an integer unit, an arithmetic logic unit, or a tensor core.

In some aspects, the techniques described herein relate to a method, wherein the dispatcher selects the tensor core of the first processor element to execute the thread of the first group of threads based on the dispatcher determining the thread of the first group of threads is associated with matrix multiplication.

In some aspects, the techniques described herein relate to a method, wherein the base die of the stacked memory module includes: the microcontroller; the first processor element and the second processor element; a shared memory to share, between the first processor element and the second processor element, data that is associated with processes executed by the first processor element and the second processor element; and an interconnect that connects the microcontroller to the first processor element, the second processor element, the shared memory, and at least one memory die stacked on top of the base die.

In some aspects, the techniques described herein relate to a processing in memory system, the processing in memory system including: a first system in package communicatively connected to a second system in package, wherein at least one of the first system in package or the second system in package include stacked memory modules interconnected via die-to-die (D2D) connections, a stacked memory module of the stacked memory modules including: a base die that includes: a microcontroller; a plurality of processor elements; a shared memory to share, between the plurality of processor elements, data that is associated with processes executed by the plurality of processor elements; and an interconnect that connects the microcontroller to the plurality of processor elements, the shared memory, and at least one memory die stacked on top of the base die.

In some aspects, the techniques described herein relate to a processing in memory system, wherein: a programming model associated with the stacked memory modules includes a kernel grid that includes multiple kernel sub grids, and a kernel sub grid of the multiple kernel sub grids includes a thread block that includes at least a first group of threads and a second group of threads different from the first group of threads.

In some aspects, the techniques described herein relate to a processing in memory system, wherein a host of the system in package assigns, via application code, the kernel sub grid of the multiple kernel sub grids to the stacked memory module.

In some aspects, the techniques described herein relate to a processing in memory system, wherein the microcontroller of the stacked memory module assigns execution of the thread block of the kernel sub grid to a first processor element of the stacked memory module and assigns execution of a second thread block of the kernel sub grid to a second processor element of the stacked memory module, the second thread block including one or more groups of threads.

A computer-readable medium is disclosed. The computer-readable medium can store instructions that, when executed by a computer, cause the computer to perform substantially the same or similar operations as described herein are further disclosed. Similarly, non-transitory computer-readable media, devices, and systems for performing substantially the same or similar operations as described herein are further disclosed.

The systems and methods described herein may be based on a standalone accelerator architecture based on disaggregated memory and compute (e.g., stacked memory or HBM cubes with compute capability). The systems and methods described may provide an execution and programming model based on a GPU execution and programming model. The systems and methods described herein include multiple advantages and benefits. For example, the systems and methods may provide improved scaling of compute and memory resources compared to other systems, resulting in additional memory capacity and bandwidth in a given package. The systems and methods described herein provide improved trillion floating-point operations per second (TFLOPS) per workload for certain workloads (e.g., memory bandwidth intensive workloads, high memory capacity applications).

### BRIEF DESCRIPTION OF THE DRAWINGS

The above-mentioned aspects and other aspects of the present systems and methods will be better understood when the present application is read in view of the following figures in which like numbers indicate similar or identical elements. Further, the drawings provided herein are for purpose of illustrating certain embodiments only; other embodiments, which may not be explicitly illustrated, are not excluded from the scope of this disclosure.

These and other features and advantages of the present disclosure will be appreciated and understood with reference to the specification, claims, and appended drawings, wherein:
FIG. 1 illustrates an example system in accordance with one or more implementations as described herein.
FIG. 2 illustrates details of the system of FIG. 1, according to one or more implementations as described herein.
FIG. 3 illustrates an example system in accordance with one or more implementations as described herein.
FIG. 4 illustrates an example system in accordance with one or more implementations as described herein.
FIG. 5 illustrates an example system in accordance with one or more implementations as described herein.
FIG. 6 illustrates an example logical hierarchy in accordance with one or more implementations as described herein.
FIG. 7 depicts a flow diagram illustrating an example method associated with the disclosed systems, in accordance with example implementations described herein.
FIG. 8 depicts a flow diagram illustrating an example method associated with the disclosed systems, in accordance with example implementations described herein.

While the present systems and methods are susceptible to various modifications and alternative forms, specific embodiments thereof are shown by way of example in the drawings and will herein be described. The drawings may not be to scale. It should be understood, however, that the drawings and detailed description thereto are not intended to limit the present systems and methods to the particular form disclosed.

### DETAILED DESCRIPTION OF VARIOUS EMBODIMENTS

The details of one or more embodiments of the subject matter described herein are set forth in the accompanying drawings and the description below. Other features, aspects, and advantages of the subject matter will become apparent from the description, the drawings, and the claims.

Various embodiments of the present disclosure now will be described more fully hereinafter with reference to the accompanying drawings, in which some, but not all embodiments are shown. Indeed, the disclosure may be embodied in many forms and should not be construed as limited to the embodiments set forth herein; rather, these embodiments are provided so that this disclosure will satisfy applicable legal requirements. The term "or" is used herein in both the alternative and conjunctive sense, unless otherwise indicated. The terms "illustrative" and "example" are used to be examples with no indication of quality level. Like numbers refer to like elements throughout. Arrows in each of the figures depict bi-directional data flow and/or bi-directional data flow capabilities. The terms "path," "pathway" and "route" are used interchangeably herein.

Embodiments of the present disclosure may be implemented in various ways, including as computer program products that comprise articles of manufacture. A computer program product may include a non-transitory computer-readable storage medium storing applications, programs, program components, scripts, source code, program code, object code, byte code, compiled code, interpreted code, machine code, executable instructions, and/or the like (also referred to herein as executable instructions, instructions for execution, computer program products, program code, and/or similar terms used herein interchangeably). Such non-transitory computer-readable storage media include all computer-readable media (including volatile and non-volatile media).

In one embodiment, a non-volatile computer-readable storage medium may include a floppy disk, flexible disk, hard disk, solid-state storage (SSS) (for example a solid-state drive (SSD)), solid state card (SSC), solid state module (SSM), enterprise flash drive, magnetic tape, or any other non-transitory magnetic medium, and/or the like. A non-volatile computer-readable storage medium may include a punch card, paper tape, optical mark sheet (or any other physical medium with patterns of holes or other optically recognizable indicia), compact disc read only memory (CD-ROM), compact disc-rewritable (CD-RW), digital versatile disc (DVD), Blu-ray disc (BD), any other non-transitory optical medium, and/or the like. Such a non-volatile computer-readable storage medium may include read-only memory (ROM), programmable read-only memory (PROM), erasable programmable read-only memory (EPROM), electrically erasable programmable read-only memory (EEPROM), flash memory (for example Serial, NAND, NOR, and/or the like), multimedia memory cards (MMC), secure digital (SD) memory cards, SmartMedia cards, CompactFlash (CF) cards, Memory Sticks, and/or the like. Further, a non-volatile computer-readable storage medium may include conductive-bridging random access memory (CBRAM), phase-change random access memory (PRAM), ferroelectric random-access memory (FeRAM), non-volatile random-access memory (NVRAM), magnetoresistive random-access memory (MRAM), resistive random-access memory (RRAM), Silicon-Oxide-Nitride-Oxide-Silicon memory (SONOS), floating junction gate random access memory (FJG RAM), Millipede memory, racetrack memory, and/or the like.

In one embodiment, a volatile computer-readable storage medium may include random access memory (RAM), dynamic random access memory (DRAM), static random access memory (SRAM), fast page mode dynamic random access memory (FPM DRAM), extended data-out dynamic random access memory (EDO DRAM), synchronous dynamic random access memory (SDRAM), double data rate synchronous dynamic random access memory (DDR SDRAM), double data rate type two synchronous dynamic random access memory (DDR2 SDRAM), double data rate type three synchronous dynamic random access memory (DDR3 SDRAM), Rambus dynamic random access memory (RDRAM), Twin Transistor RAM (TTRAM), Thyristor RAM (T-RAM), Zero-capacitor (Z-RAM), Rambus in-line memory component (RIMM), dual in-line memory component (DIMM), single in-line memory component (SIMM), video random access memory (VRAM), cache memory (including various levels), flash memory, register memory, and/or the like. It will be appreciated that where embodiments are described to use a computer-readable storage medium, other types of computer-readable storage media may be substituted for or used in addition to the computer-readable storage media described above.

As should be appreciated, various embodiments of the present disclosure may be implemented as methods, apparatus, systems, computing devices, computing entities, and/or the like. As such, embodiments of the present disclosure may take the form of an apparatus, system, computing device, computing entity, and/or the like executing instructions stored on a computer-readable storage medium to perform certain steps or operations. Thus, embodiments of the present disclosure may take the form of a hardware embodiment, a computer program product embodiment, and/or an embodiment that comprises a combination of computer program products and hardware performing certain steps or operations.

Embodiments of the present disclosure are described below with reference to block diagrams and flowchart illustrations. Thus, it should be understood that each block of the block diagrams and flowchart illustrations may be implemented in the form of a computer program product, a hardware embodiment, a combination of hardware and computer program products, and/or apparatus, systems, computing devices, computing entities, and/or the like carrying out instructions, operations, steps, and similar words used interchangeably (for example the executable instructions, instructions for execution, program code, and/or the like) on a computer-readable storage medium for execution. For example, retrieval, loading, and execution of code may be performed sequentially, such that one instruction is retrieved, loaded, and executed at a time. In some example embodiments, retrieval, loading, and/or execution may be performed in parallel, such that multiple instructions are retrieved, loaded, and/or executed together. Thus, such embodiments can produce specifically configured machines performing the steps or operations specified in the block diagrams and flowchart illustrations. Accordingly, the block diagrams and flowchart illustrations support various combinations of embodiments for performing the specified instructions, operations, or steps.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not be necessarily all referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "predetermined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. Similarly, various waveforms and timing diagrams are shown for illustrative purpose only. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on chip (SoC), an assembly, and so forth.

The following description is presented to enable one of ordinary skill in the art to make and use the subject matter disclosed herein and to incorporate it in the context of particular applications. While the following is directed to specific examples, other and further examples may be devised without departing from the basic scope thereof.

Various modifications, as well as a variety of uses in different applications, will be readily apparent to those skilled in the art, and the general principles defined herein may be applied to a wide range of embodiments. Thus, the subject matter disclosed herein is not intended to be limited to the embodiments presented, but is to be accorded the widest scope consistent with the principles and novel features disclosed herein.

In the description provided, numerous specific details are set forth in order to provide a more thorough understanding of the subject matter disclosed herein. It will, however, be apparent to one skilled in the art that the subject matter disclosed herein may be practiced without necessarily being limited to these specific details. In other instances, well-known structures and devices are shown in block diagram form, rather than in detail, in order to avoid obscuring the subject matter disclosed herein.

All the features disclosed in this specification (e.g., any accompanying claims, abstract, and drawings) may be replaced by alternative features serving the same, equivalent or similar purpose, unless expressly stated otherwise. Thus, unless expressly stated otherwise, each feature disclosed is one example only of a generic series of equivalent or similar features.

Various features are described herein with reference to the figures. It should be noted that the figures are only intended to facilitate the description of the features. The various features described are not intended as an exhaustive description of the subject matter disclosed herein or as a limitation on the scope of the subject matter disclosed herein. Additionally, an illustrated example need not have all the aspects or advantages shown. An aspect or an advantage described in conjunction with a particular example is not necessarily limited to that example and can be practiced in any other examples even if not so illustrated, or if not so explicitly described.

Furthermore, any element in a claim that does not explicitly state "means for" performing a specified function, or "step for" performing a specific function, is not to be interpreted as a "means" or "step" clause as specified in 35 U.S.C. Section 112, Paragraph 6. In particular, the use of "step of" or "act of" in the Claims herein is not intended to invoke the provisions of 35 U.S.C. 112, Paragraph 6.

It is noted that, if used, the labels left, right, front, back, top, bottom, forward, reverse, clockwise and counterclockwise have been used for convenience purposes only and are not intended to imply any particular fixed direction. Instead, the labels are used to reflect relative locations and/or directions between various portions of an object.

Data processing may include data buffering, aligning incoming data from multiple communication lanes, forward error correction (FEC), etc. For example, data may be received by an analog front end (AFE), which can prepare the incoming data for digital processing. The digital portion of the transceivers (e.g., digital signal processor (DSP)) may provide skew management, equalization, reflection cancellation, and/or other functions. It is to be appreciated that the process described herein can provide many benefits, including saving both power and cost.

Moreover, the terms "system," "component," "module," "interface," "model," or the like are generally intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a controller and the controller can be a component. One or more components may reside within a process and/or thread of execution and a component may be localized on one computer and/or distributed between two or more computers.

Unless explicitly stated otherwise, each numerical value and range may be interpreted as being approximate, as if the word "about" or "approximately" preceded the value of the value or range. Signals and corresponding nodes or ports might be referred to by the same name and are interchangeable for purposes here.

While embodiments may have been described with respect to circuit functions, the embodiments of the subject matter disclosed herein are not limited. Possible implementations may be embodied in a single integrated circuit, a multi-chip module, a single card, SoC, or a multi-card circuit pack. As would be apparent to one skilled in the art, the various embodiments might also be implemented as part of a larger system. Such embodiments may be employed in conjunction with, for example, a digital signal processor, microcontroller, field-programmable gate array, application-specific integrated circuit, or general-purpose computer.

As would be apparent to one skilled in the art, various functions of circuit elements may also be implemented as processing blocks in a software program. Such software may be employed in, for example, a digital signal processor, microcontroller, or general-purpose computer. Such software may be embodied in the form of program code embodied in tangible media, such as magnetic recording media, optical recording media, solid-state memory, floppy diskettes, CD-ROMs, hard drives, or any other non-transitory machine-readable storage medium, that when the program code is loaded into and executed by a machine, such as a computer, the machine becomes an apparatus for practicing the subject matter disclosed herein. When implemented on a general-purpose processor, the program code segments combine with the processor to provide a unique device that operates analogously to specific logic circuits. Described embodiments may also be manifest in the form of a bit stream or other sequence of signal values electrically or optically transmitted through a medium, stored magnetic-field variations in a magnetic recording medium, etc., generated using a method and/or an apparatus as described herein.

The systems and methods described herein may be based on and/or may include artificial intelligence (AI). Machine learning (ML) may be a subset of AI that helps build AI-driven applications. The systems and methods described make be based on AI programs that use Large Language Models (LLMs).

The systems and methods described herein may be based on and/or may include a neural processing unit (NPU). NPUs can include a specialized processor that executes machine learning algorithms. NPUs are also called AI accelerators or intelligent processing units (IPUs). NPUs improve the inference performance of neural networks. NPUs work similarly to the human brain. They are made up of nerve cells and synapses that transmit and receive signals to and from each other. NPUs use a data-driven parallel computing architecture to process large amounts of multimedia data, like images and videos. NPUs may be used to offload specific workloads, allowing dedicated hardware to focus on more specialized tasks.

The systems and methods described herein may be based on and/or may include High Bandwidth Memory (HBM). HBM can include a type of memory architecture used in high-performance computing applications that requires fast data transfer speeds. HBM uses 3D stacking technology to pack more memory chips into a smaller space, which reduces the distance data needs to travel between the processor and memory. This results in higher bandwidth, which allows for faster data transfer, and lower power consumption, which can help extend battery life. The total data-bit width of an HBM stack may be divided across a number of channels (e.g., HBM channels). An HBM stack of four memory dies may have two 128-bit channels per die for a total of 8 channels and a width of 1024 bits in total. Thus, a device (e.g., accelerator, GPU) with four HBM stacks would have a memory bus with a width of 4096 bits.

The systems and methods described herein may be based on and/or may include Compute Express Link (CXL) technologies (e.g., CXL memory, CXL interfaces). CXL can include high-speed interfaces that allow for communication between devices, such as processors, memory, accelerators, storage, and other IO devices. CXL can be used for high-performance data center computers and may use a Peripheral Component Interconnect Express (PCIe) physical and/or electrical interface.

The systems and methods described herein may be based on and/or may include a peer-to-peer (P2P) interface. A P2P interface can include an interface that allows computer systems to interact directly with other computer systems on a P2P network, where each device can act as a client and/or server, sharing resources such as files, processing power, and/or storage without relying on a central server to manage the connections.

The systems and methods described herein may be based on and/or may include a die-to-die (D2D) interface. D2D may provide interconnectivity based on 3D-stacking, 2.5D packaging, etc. A D2D interface can include a functional block that allows for a data link between two silicon dies that are assembled in the same package. D2D interfaces can be used in applications, such as networking, high-performance computing (HPC), hyperscale data center, and AI systems. D2D interfaces can provide high-speed, low-latency communication between two dies, between two SoCs, etc.

The systems and methods described herein may be based on and/or may include universal chiplet interconnect express (UCIe). UCIe may include die-to-die connectivity in multi-die systems. UCIe may define the physical layer, protocol stack, software model, and procedures for D2D interconnections. The protocol layer of UCIe may be based on CXL (e.g., CXL.io (PCIe), CXL.mem and CXL.cache protocols). UCIe can enable low-latency, power-efficient die-to-die connectivity. UCIe can provide seamless interoperability (e.g., plug and play interoperability) similar to PCIe, universal serial bus (USB), etc.

The systems and methods described herein may be based on and/or may include InfiniBand. InfiniBand may include a high-speed, low-latency networking standard used to connect servers, storage devices, and other network components. InfiniBand may be used in data centers and high-performance computing (HPC) environments based on the systems and methods described herein.

The systems and methods described herein may be based on and/or may include a System-on-Chip (SoC). An SoC may include a microchip that contains electronic circuits and parts for independent operation. An SoC may be a type of integrated circuit (IC) design that combines many or all high-level function elements of an electronic device onto a single chip. SoCs can include a processor, memory, storage, input/output interfaces, including network interfaces, etc.

The systems and methods described herein may be based on and/or may include a system in a package (SiP) or system-in-package. An SiP may include a number of integrated circuits (ICs) enclosed in one chip carrier package or encompassing an IC package substrate and may perform all or most of the functions of an electronic system. The ICs may be stacked using package on package, placed side by side, and/or embedded in the substrate. In SiPs, two or more dies may be stacked vertically on the package substrate. Stacked chips may be internally connected by fine wires that are bonded to the package substrate. In some cases, chips may be stacked based on through-silicon via (TSV) bonding. TSV can include a packaging technology that uses vertical electrical connections between silicon wafers or dies to replace the conventional wires used to connect chips. TSVs can be used to create 2.5D and/or 3D packages that contain multiple semiconductor dies. Additionally, or alternatively, solder bumps (e.g., based on flip chip technology) may be used to join stacked chips together and to the package substrate, or even multiple techniques may be used in a single package (e.g., solder bumps, TSV, bonded fine wires, etc.). Thus, while an SoC may integrate two or more ICs onto a single chip, an SiP may integrate two or more ICs in a single package.

The systems and methods described herein may be based on and/or may include a network-on-chip (NoC) interconnect. An NoC may include technology that connects functional IP blocks to a network on a chip (SoC). An NoC interconnect may be used for SoCs, SiPs, etc.

The systems and methods described herein may be based on and/or may include in-order execution (e.g., a pipeline with in-order execution). In-order execution may include a processor design that executes instructions in the same order as they appear in the program code. In-order execution may simplify control logic and reduce the hardware resources required for dependency checking and instruction scheduling. In contrast, an out-of-order execution processors may avoid stalls that occur in in-order processors when an instruction is not ready to be processed due to missing data. Out-of-order execution processors fill these slots with other instructions that are ready and then reorder the results at the end.

The systems and methods described herein may be based on and/or may include a kernel. A kernel can include the core of a computer system's operating system and the main layer between the operating system and the system's hardware. The kernel may be responsible for managing low-level functions of the computer, such as resource management, allocating resources between applications, memory management, controlling the system's memory, device management, keeping track of available devices connected to the system.

The systems and methods described herein may be based on and/or may include threads. A thread can include a sequence of instructions that can be executed independently within a program. Threads enable multitasking and concurrent execution within a single application. Threads can be smaller units within processes that share the same memory space and resources, while processes can be independent program instances that operate in isolation with their own memory space and resources. Threads can include user-level threads and kernel-level threads. User-level threads may be associated with processes launched by the user, while kernel-level threads may be managed by the kernel / operating system.

The systems and methods described herein may include and/or may be based on processor elements (PEs). A PE may include a single, independent computing unit within a larger system (e.g., PEs of an HBM cube among multiple HBM cubes on an HBM SiP) designed for parallel processing and AI programming. PEs may be used in specialized AI hardware such as GPUs, custom AI chips, etc. Many PEs may work together (e.g., in parallel execution) to perform complex calculations in an accelerated manner. A given PE may include a processing core that can execute its own instructions simultaneously with other PEs on the chip.

The systems and methods described herein may include and/or may be based on AI programming models that include execution of kernels. A kernel can include a function that is executed on an AI accelerator (e.g., GPU, TPU, NPU, etc.). In some cases, a kernel may include a function that is configured to be executed in parallel on an AI accelerator. For example, the parallel portion of an application may be executed N times in parallel by N different threads, as opposed to executing one time as with some functions. In some cases, a kernel may be executed with the aid of threads. A thread may include an abstract entity that represents the execution of the kernel. A kernel can include a function that compiles to run on a given device (e.g., specialized device). Multi-threaded applications may use several threads that run at the same time, to organize parallel computation. In some cases, a given thread may include an index, and the index may be used for determining memory address locations and/or for making control decisions. In some cases, when a kernel is launched, the number of threads per thread block and/or the number of thread blocks may be specified.

The systems and methods described herein may include and/or may be based on thread blocks. A thread block may include a programming abstraction that represents a group of threads that can be executed serially or in parallel. For better process and data mapping, threads may be grouped into thread blocks. A thread block may include some number of threads (e.g., 512 threads, 1024 threads, 2048 threads). The threads in a given thread block may run on the same stream processor (e.g., a stream processor of multiple stream processors in a given AI accelerator, GPU, etc.) Threads in the same block can communicate with each other via shared memory, barrier synchronization, and/or other synchronization primitives such as atomic operations. Multiple thread blocks may be combined to form a kernel grid. A kernel grid may be used to organize a large number of threads into a structured hierarchy for efficient parallel computation. All the blocks in a given grid may include the same number of threads. The number of threads in a block may be limited, but grids can be used for computations that require a large number of thread blocks to operate in parallel and to use all available multiprocessors. Thus, a kernel grid may include a collection of thread blocks that may be launched together to execute a kernel. A kernel grid may represent a two-dimensional or three-dimensional array of blocks, where each block contains a group of threads that run in parallel on an AI accelerator.

Some systems are based on a centralized compute architecture, where a compute die is surrounded by multiple memory dies (e.g. a GPU surrounded by multiple HBM modules). Systems based on the centralized compute architecture can limit the amount of memory dies that can be included in a given package. Also, such systems may limit the memory capacity and bandwidth of memory operations, resulting in relatively poor performance in memory intensive workloads.

The systems and methods described herein may provide an accelerator architecture based on disaggregated compute and memory. The systems and methods described may provide a standalone architecture, execution model, and programming model for accelerators (e.g., high-performance computing accelerators). In some cases, the systems and methods described herein may be based on a programming model that is configured based on a GPU programming model. However, unlike a centralized compute architecture, where GPU/CPU with computing capability is surround by HBM dies, the HBM standalone architecture may include computing capability on the base die along with computing capability on memory dies in the HBM die. Based on the systems and methods described herein, an HBM die itself may include computing capability (e.g., HBM die does not necessarily rely on computing from GPU/CPU, though the HBM die may be compatible with GPU/CPU programming model).

Based on the disaggregated compute and memory, the systems and methods described improve the scalability of compute and memory resources compared to the centralized compute architecture. Based on the systems and methods described, a given system may provide for additional memory dies (e.g., more HBM dies compared to centralized compute architectures) with compute capability implemented on the same package, resulting in improved performance for memory intensive workloads. The systems and methods described improve memory bandwidth based on the reduced number of memory-to-compute connections and the reduced length of memory-to-compute connections.

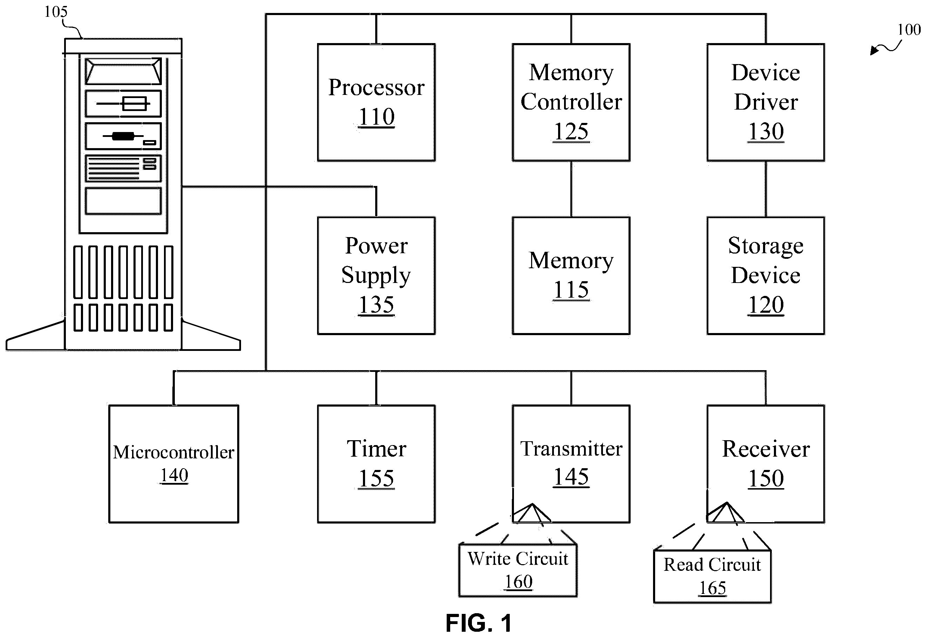

**FIG. 1** illustrates an example system 100 in accordance with one or more implementations as described herein. In FIG. 1, machine 105, which may be termed a host, a system, or a server, is shown. While FIG. 1 depicts machine 105 as a tower computer, embodiments of the disclosure may extend to any form factor or type of machine. For example, machine 105 may be a rack server, a blade server, a desktop computer, a tower computer, a mini tower computer, a desktop server, a laptop computer, a notebook computer, a tablet computer, etc.

Machine 105 may include processor 110, memory 115, and storage device 120. Processor 110 may be any variety of processor. It is noted that processor 110, along with the other components discussed below, are shown outside the machine for ease of illustration: embodiments of the disclosure may include these components within the machine. While FIG. 1 shows a single processor 110, machine 105 may include any number of processors, each of which may be single core or multi-core processors, each of which may implement a Reduced Instruction Set Computer (RISC) architecture or a Complex Instruction Set Computer (CISC) architecture (among other possibilities), and may be mixed in any desired combination.

Processor 110 may be coupled to memory 115. Memory 115 may be any variety of memory, such as flash memory, Dynamic Random Access Memory (DRAM), Static Random Access Memory (SRAM), Persistent Random Access Memory, Ferroelectric Random Access Memory (FRAM), or Non-Volatile Random Access Memory (NVRAM), such as Magnetoresistive Random Access Memory (MRAM), Phase Change Memory (PCM), or Resistive Random-Access Memory (ReRAM). Memory 115 may include volatile and/or non-volatile memory. Memory 115 may use any desired form factor: for example, Single In-Line Memory Module (SIMM), Dual In-Line Memory Module (DIMM), Non-Volatile DIMM (NVDIMM), etc. Memory 115 may be any desired combination of different memory types, and may be managed by memory controller 125. Memory 115 may be used to store data that may be termed "short-term": that is, data not expected to be stored for extended periods of time. Examples of short-term data may include temporary files, data being used locally by applications (which may have been copied from other storage locations), and the like.

Processor 110 and memory 115 may support an operating system under which various applications may be running. These applications may issue requests (which may be termed commands) to read data from or write data to either memory 115 or storage device 120. When storage device 120 is used to support applications reading or writing data via some sort of file system, storage device 120 may be accessed using device driver 130. While FIG. 1 shows one storage device 120, there may be any number (one or more) of storage devices in machine 105. Storage device 120 may support any desired protocol or protocols, including, for example, the Non-Volatile Memory Express (NVMe^{®}) protocol, a Serial Attached Small Computer System Interface (SCSI) (SAS) protocol, or a Serial AT Attachment (SATA) protocol. Storage device 120 may include any desired interface, including, for example, a Peripheral Component Interconnect Express (PCIe^{®}) interface, or a Compute Express Link (CXL^{®}) interface. Storage device 120 may take any desired form factor, including, for example, a U.2 form factor, a U.3 form factor, a M.2 form factor, Enterprise and Data Center Standard Form Factor (EDSFF) (including all of its varieties, such as E1 short, E1 long, and the E3 varieties), or an Add-In Card (AIC).

While FIG. 1 uses the term "storage device," embodiments of the disclosure may include any storage device formats that may benefit from the use of computational storage units, examples of which may include hard disk drives, Solid State Drives (SSDs), or persistent memory devices, such as PCM, ReRAM, or MRAM. Any reference to "storage device" "SSD" below should be understood to include such other embodiments of the disclosure and other varieties of storage devices. In some cases, the term "storage unit" may encompass storage device 120 and memory 115. Machine 105 may include power supply 135. Power supply 135 may provide power to machine 105 and its components.

Machine 105 may include transmitter 145 and receiver 150. Transmitter 145 or receiver 150 may be respectively used to transmit or receive data. In some cases, transmitter 145 and/or receiver 150 may be used to communicate with memory 115 and/or storage device 120. Transmitter 145 may include write circuit 160, which may be used to write data into storage, such as a register, in memory 115 and/or storage device 120. In a similar manner, receiver 150 may include read circuit 165, which may be used to read data from storage, such as a register, from memory 115 and/or storage device 120. In the illustrated example, machine 105 may include timer 155, which may be used to time one or more operations, indicate a time period, indicate a lapse of time, indicate an expiration, indicate a timeout, etc.

In one or more examples, machine 105 may be implemented with any type of apparatus. Machine 105 may be configured as (e.g., as a host of) one or more servers such as a compute server, a storage server, storage node, a network server, a supercomputer, data center system, and/or the like, or any combination thereof. Additionally, or alternatively, machine 105 may be configured as (e.g., as a host of) one or more computers such as a workstation, a personal computer, a tablet, a smartphone, and/or the like, or any combination thereof. Machine 105 may be implemented with any type of apparatus that may be configured as a device including, for example, an accelerator device, a storage device, a network device, a memory expansion and/or buffer device, a central processing unit (CPU), a graphics processing unit (GPU), a neural processing unit (NPU), a tensor processing unit (TPU), optical processing units (OPU), and/or the like, or any combination thereof.

Any communication between devices including machine 105 (e.g., host, computational storage device, and/or any intermediary device) can occur over an interface that may be implemented with any type of wired and/or wireless communication medium, interface, protocol, and/or the like including PCIe, NVMe, Ethernet, NVMe-oF, Compute Express Link (CXL), and/or a coherent protocol such as CXL.mem, CXL.cache, CXL.IO and/or the like, Gen-Z, Open Coherent Accelerator Processor Interface (OpenCAPI), Cache Coherent Interconnect for Accelerators (CCIX), Advanced eXtensible Interface (AXI) and/or the like, or any combination thereof, Transmission Control Protocol/Internet Protocol (TCP/IP), FibreChannel, InfiniBand, Serial AT Attachment (SATA), Small Computer Systems Interface (SCSI), Serial Attached SCSI (SAS), iWARP, any generation of wireless network including 2G, 3G, 4G, 5G, and/or the like, any generation of Wi-Fi, Bluetooth, near-field communication (NFC), and/or the like, or any combination thereof. In some embodiments, the communication interfaces may include a communication fabric including one or more links, buses, switches, hubs, nodes, routers, translators, repeaters, and/or the like. In some embodiments, system 100 may include one or more additional apparatus having one or more additional communication interfaces.

Any of the functionality described herein, including any of the host functionality, device functionally, microcontroller 140 functionality, and/or the like, may be implemented with hardware, software, firmware, or any combination thereof including, for example, hardware and/or software combinational logic, sequential logic, timers, counters, registers, state machines, volatile memories such as at least one of or any combination of the following: dynamic random access memory (DRAM) and/or static random access memory (SRAM), nonvolatile memory including flash memory, persistent memory such as cross-gridded nonvolatile memory, memory with bulk resistance change, phase change memory (PCM), and/or the like and/or any combination thereof, complex programmable logic devices (CPLDs), field programmable gate arrays (FPGAs), application specific integrated circuits (ASICs) CPUs including complex instruction set computer (CISC) processors such as x86 processors and/or reduced instruction set computer (RISC) processors such as RISC-V and/or ARM processors), GPUs, NPUs, TPUs, OPUs, and/or the like, executing instructions stored in any type of memory. In some embodiments, one or more components of microcontroller 140 may be implemented as an SoC or in an SoC. In some cases, microcontroller 140 may be implemented on a base die of a stacked memory module (e.g., HBM cube). In some cases, a HBM SiP may include multiple HBM cubes, where a base die of at least one of the HBM cubes includes a microcontroller (e.g., each HBM cube includes a microcontroller), one or more PEs, shared memory for processing by the PEs, and an NoC interconnect that connects the microcontroller to the one or more PEs, shared memory, and memory dies stacked vertically on the base die. In some cases, shared memory may be available and shared among PEs of a given HBM cube, while the memory dies stacked vertically on the base die may be available.

In some examples, microcontroller 140 may include any one or combination of logic (e.g., logical circuit), hardware (e.g., processing unit, memory, storage), software, firmware, and the like. In some cases, microcontroller 140 may perform one or more functions in conjunction with processor 110. In some cases, at least a portion of microcontroller 140 may be implemented in or by processor 110 and/or memory 115. The one or more logic circuits of microcontroller 140 may include any one or combination of multiplexers, registers, logic gates, arithmetic logic units (ALUs), cache, computer memory, microprocessors, processing units (CPUs, GPUs, NPUs, and/or TPUs), FPGAs, ASICs, etc., that enable microcontroller 140 to provide a standalone architecture for processing in memory (e.g., including a standalone high-bandwidth memory (HBM) architecture and programming model).

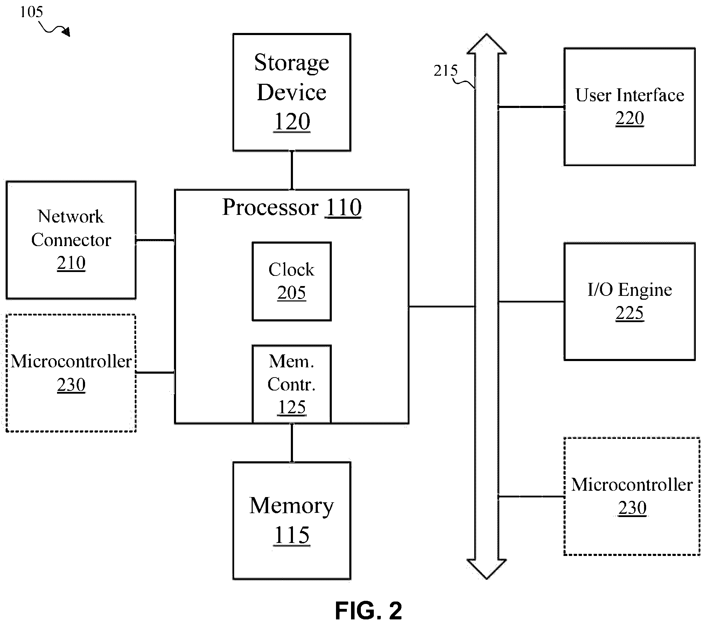

**FIG. 2** illustrates details of machine 105 of FIG. 1, according to examples described herein. In the illustrated example, machine 105 may include processor 110. Processor 110 may include one or more processors and/or one or more dies. Processor 110 may include memory controller 125 (e.g., one or more memory controllers) and clock 205 (e.g. one or more clocks), which may be used to coordinate the operations of the components of the machine. Processor 110 may be coupled to memory 115 (e.g., one or more memory chips, stacked memory, etc.), which may include random access memory (RAM), read-only memory (ROM), or other state preserving media, as examples. Processor 110 may be coupled to storage device 120 (e.g., one or more storage devices), and to network connector 210, which may be, for example, an Ethernet connector or a wireless connector. Processor 110 may be connected to bus 215 (e.g., one or more buses), to which may be attached user interface 220 (e.g., one or more user interfaces) and Input/Output (I/O) interface ports that may be managed using I/O engine 225 (e.g., one or more I/O engines), among other components. As shown, processor 110 may be coupled to microcontroller 230, which may be an example of microcontroller 140 of FIG. 1. Additionally, or alternatively, processor 110 may be connected to bus 215, to which may be attached microcontroller 230.

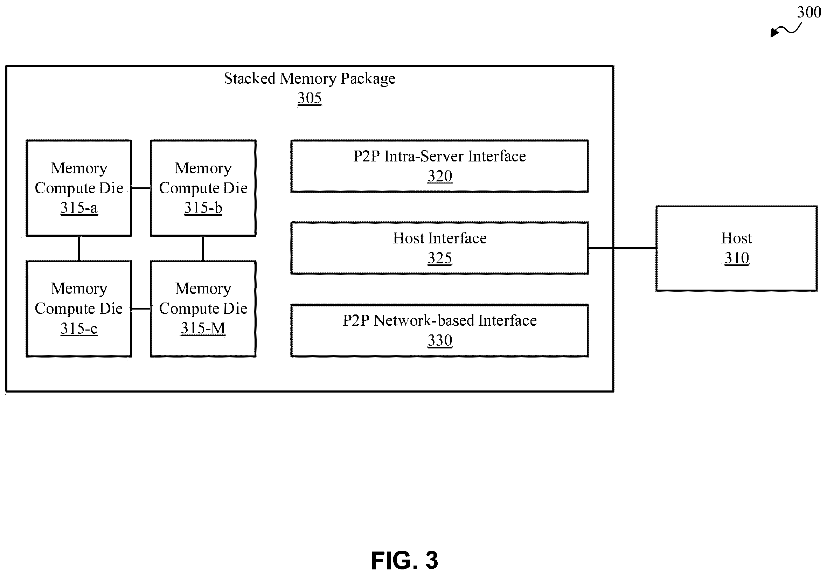

**FIG. 3** illustrates an example system 300 in accordance with one or more implementations as described herein. In some configurations, one or more aspects of system 300 may be implemented by or in conjunction with microcontroller 140 of FIG. 1 and/or microcontroller 230 of FIG. 2. In some configurations, one or more aspects of system 300 may be implemented by or in conjunction with machine 105, components of machine 105, or any combination thereof.

In the illustrated example, system 300 may include stacked memory package 305 and host 310. In some cases, stacked memory package 305 may include or may be implemented in an HBM SiP. As shown, stacked memory package 305 may include one or more memory compute dies (e.g., memory compute die 315-a, memory compute die 315-b, memory compute die 315-c, etc.), a P2P intra-server interface 320, a host interface 325, and a P2P network-based interface 330. In some examples, a given stacked memory package such as stacked memory package 305 may include one or more memory compute dies (e.g., 8, 12, 16, 24, 32, etc.). It is noted that the number of memory compute dies (e.g., stacked memory modules, HBM cubes) that may be included in a given stacked memory package (e.g., HBM SiP) may be based on the technology available to fabricate the stacked memory modules.

In some examples, stacked memory package 305 may include some number of memory compute dies. In the illustrated example, the one or more memory compute dies may include M memory compute dies, where M is a positive integer (e.g., 4, 8, 12, 16, 32, 64, etc.). In some cases, a given memory compute die (e.g., memory compute die 315-a, memory compute die 315-b, or memory compute die 315-c, etc.) may include or may be implemented as a stacked memory module (e.g., 2.5D and/or 3D stacked DRAM, 2.5D and/or 3D stacked NAND, etc.) that includes memory and compute resources (e.g., PEs, processor units, AI accelerators, etc.).

In the illustrated example, P2P intra-server interface 320, host interface 325, and/or P2P network-based interface 330 may include physical interfaces that allow components or systems external to stacked memory package 305 connect to stacked memory package 305 and/or components of stacked memory package 305. In some examples, P2P intra-server interface 320 may include a P2P high speed intra-server interconnect based on at least one of compute express link (CXL) or ultra-accelerator link (UAL). For example, P2P intra-server interface 320 may provide a high-speed interface for communications within a given server (e.g., between stacked memory package 305 and other components within a given server). In some cases, host interface 325 may include a high-speed interconnect to a host (e.g., a host of stacked memory package 305, machine 105). P2P network-based interface 330 may include an inter-server interface based on at least one of InfiniBand or ethernet. For example, P2P network-based interface 330 provide a high-speed interface for communications between stacked memory package 305 and one or more servers external to or separate from stacked memory package 305.

As shown, memory compute die 315-a may be communicatively coupled to memory compute die 315-b and memory compute die 315-c, and memory compute die 315-M may be communicatively coupled to memory compute die 315-b and memory compute die 315-c.

It is noted that any memory compute die may be communicatively coupled to any other memory compute die of stacked memory package 305. For example, although a connection line is not illustrated between memory compute die 315-a and memory compute die 315-M or between memory compute die 315-b and memory compute die 315-c, memory compute die 315-a may be communicatively connected to memory compute die 315-M and/or any other memory compute die of stacked memory package 305. Similarly, memory compute die 315-b may be communicatively connected to memory compute die 315-c and/or any other memory compute die of stacked memory package 305.

In some cases, a communication interface between the one or more memory compute dies may be based on a D2D and/or UCIe interconnection interface.

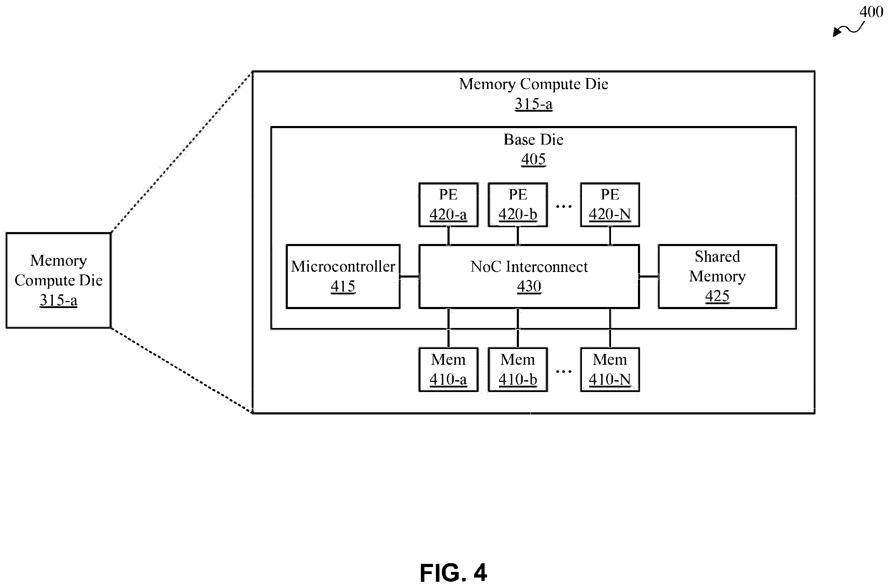

**FIG. 4** illustrates an example system 400 in accordance with one or more implementations as described herein. In some configurations, one or more aspects of system 400 may be implemented by or in conjunction with microcontroller 140 of FIG. 1 and/or microcontroller 230 of FIG. 2. In some configurations, one or more aspects of system 400 may be implemented by or in conjunction with machine 105, components of machine 105, or any combination thereof.

In the illustrated example, system 400 may depict aspects of memory compute die 315-a. As shown, memory compute die 315-a may include base die 405 and one or more memory dies (e.g., memory 410-a, memory 410-b, etc.). In some cases, the one or more memory dies may include N memory dies (e.g., memory 410-N), where N is a positive integer (e.g., 4, 8, 12, 16, 32, 64, etc.). As shown, base die 405 may include microcontroller 415, one or more PEs (e.g., PE 420-a, PE 420-b, etc.), shared memory 425, and NoC interconnect 430. Microcontroller 415 may be an example of microcontroller 140 and/or microcontroller 230. In some cases, the one or more PEs may include up to N PEs (e.g., PE 420-N), which may be based on the N memory dies. In some cases, memory compute die 315-a may include less, more, or the same number of PEs as the number of memory dies.

As shown, NoC interconnect 430 may communicatively couple microcontroller 415 to the one or more PEs 420-a, ..., 420-N, shared memory 425, and one or more memory dies 410-a, ..., 410-N. Accordingly, microcontroller 415 may control one or more aspects of processing performed by the one or more PEs (e.g., send control messages, send commands, initiate processing of one or more PEs, assign processing to one or more PEs, pause processing of one or more PEs, restart processing of one or more PEs, etc.).

As depicted in system 400, a given stacked memory compute die (e.g., memory compute die 315-a) may include compute resources (e.g., at least one processor die; multiple PEs of one or more processor dies) and memory resources (e.g., one or more memory dies; memory stacked on base die 405). In some cases, shared memory 425 may include a shared cache (e.g., shared SRAM) that the one or more PEs may use to share data between PEs based on computations performed by the PEs (e.g., PE 420-a sharing data with PE 420-b via shared memory 425).

In some examples, microcontroller 415 may orchestrate execution of an application on memory compute die 315-a. For example, microcontroller 415 may dispatch and/or orchestrate distribution of instructions of an application to the one or more PEs (e.g., for processing of the instructions by the one or more PEs). Microcontroller 415 may run firmware code that enables microcontroller 415 to manage compute and memory resources in memory compute die 315-a. Microcontroller 415 may send compute and memory commands to the one or more PEs and memory dies via NoC interconnect 430. For example, microcontroller 415 may provide a memory location in memory 410-a to PE 420-b and/or provide a memory location in memory 410-b to PE 420-a, and so on.

At least one PE (e.g., PE 420-a, PE 420-b, etc.) may include an independent computing unit designed for parallel processing and AI programming. For example, a given PE may include a processing core that can execute its own instructions independently from and/or simultaneously with other PEs on a given memory compute die. For instance, two or more PEs (e.g., PE 420-a, PE 420-b, etc.) may work together (e.g., in parallel execution) to perform complex calculations in an accelerated manner.

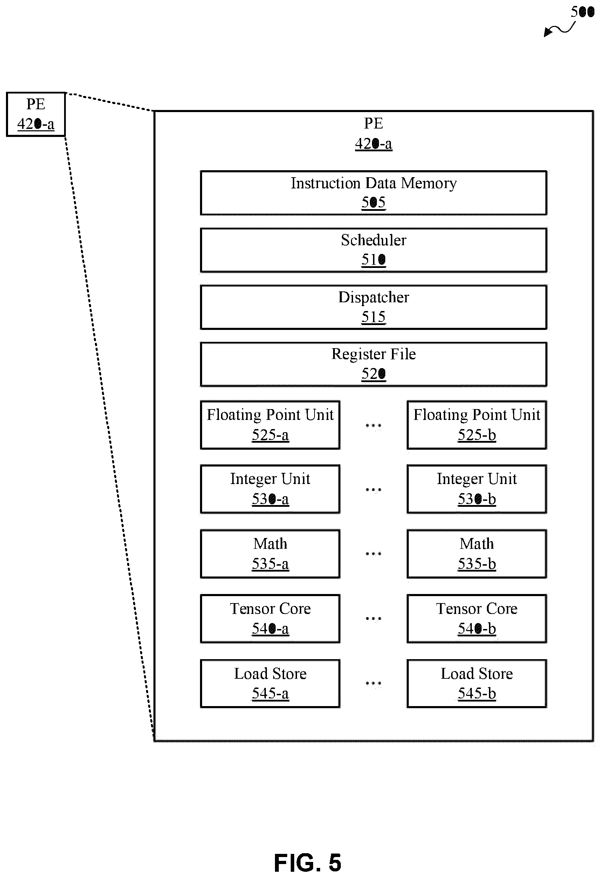

**FIG. 5** illustrates an example system 500 in accordance with one or more implementations as described herein. In some configurations, one or more aspects of system 500 may be implemented by or in conjunction with microcontroller 140 of FIG. 1 and/or microcontroller 230 of FIG. 2. In some configurations, one or more aspects of system 500 may be implemented by or in conjunction with machine 105, components of machine 105, or any combination thereof.

In the illustrated example, system 500 may depict aspects of PE 420-a. As shown, PE 420-a may include instruction data memory 505, scheduler 510, dispatcher 515, at least one register file (e.g., register file 520), and one or more computation units. Register files such as register file 520 may be configured to hold data during computation (e.g., hold data temporarily during computation). Register files may act as high-speed memory locations that can be quickly accessed by a PE's components (e.g., control logic, arithmetic logic units, etc.). In some cases, a register file may store output values generated by a computation unit of PE 420-a and/or supply a computation unit's inputs with operands. In some cases, PE 420-a may operate based on an in-order execution pipeline. For example, one or more operations of PE 420-a (e.g., instructions executed by PE 420-a) may be based on or executed based on an in-order execution pipeline.

As shown, the one or more computation units may include at least one floating point unit (e.g., floating point unit (FPU) 525-a, FPU 525-b), at least one integer unit (e.g., at least one arithmetic logic unit; integer unit 530-a, integer unit 530-b, etc.), at least one math coprocessor (e.g., math 535-a, math 535-b), at least one tensor core (e.g., tensor core 540-a, tensor core 540-b), and/or one or more load store units (e.g., at least one load buffer; at least one store buffer; load store 545-a, load store 545-b, etc.).

In some examples, instruction data memory 505 may include a unified data instruction memory (e.g., cache memory, where both instructions/code and data are stored together in the same cache). Additionally, or alternatively, instruction data memory 505 may include a memory/cache for instructions (e.g., application code) and/or a memory/cache for data (e.g., application data). In some implementations, instruction data memory 505 may receive an instruction from a microcontroller (e.g., microcontroller 415).

An instruction may include a location in memory (e.g., memory address, address range, starting address and address length, etc.). For example, an instruction may include a location in memory 410-a, etc. In some examples, scheduler 510 may read an instruction or data for the instruction from the indicated location in memory. Scheduler 510 may determine a computation unit best suited for executing the instruction (e.g., FPU 525-a, integer unit 530-a, math 535-a, tensor core 540-a, etc.) and schedule the execution of the instruction among the computation units accordingly. In some examples, dispatcher 515 may dispatch scheduled computation tasks to the selected computation units according to the schedule provided by scheduler 510. In some cases, scheduler 510 may select the first processor element to execute a first group of threads before a second group of threads based on scheduler 510, determining that the second group of threads depends on a result of executing the first group of threads.

In some examples, a tensor core of PE 420-a (e.g., tensor core 540-a) may be configured to perform matrix multiplication (e.g., general matrix multiplication (GEMM)). GEMM can be used as a building block for operations in AI and machine learning computations (e.g., LLMs, neural networks, etc.). GEMM can be defined as the operation C *= αAB+βC,* where *A* and *B* may include matrix inputs, *α* and *β* may be scalar inputs, and *C* may be a pre-existing matrix that is overwritten by the output.

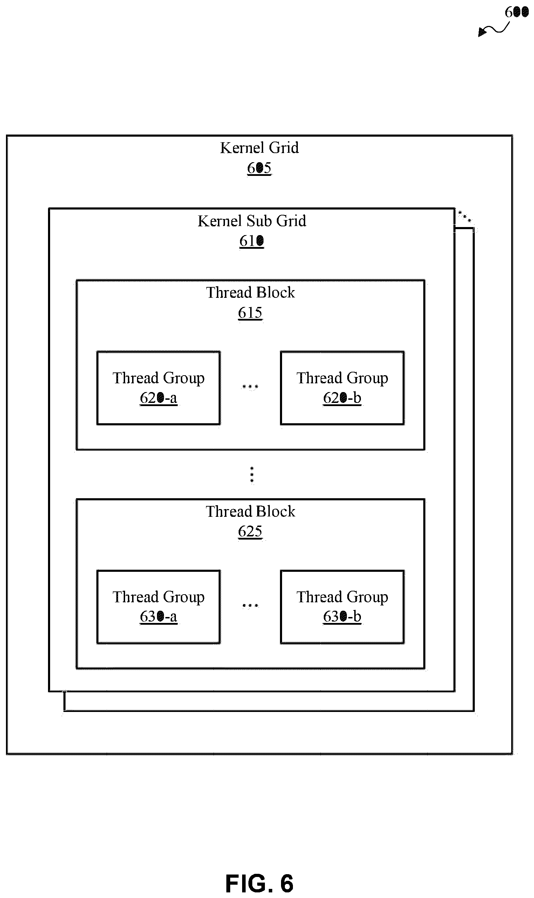

**FIG.** 6 illustrates an example logical hierarchy 600 in accordance with one or more implementations as described herein. In some configurations, one or more aspects of logical hierarchy 600 may be implemented by or in conjunction with microcontroller 140 of FIG. 1 and/or microcontroller 230 of FIG. 2. In some configurations, one or more aspects of logical hierarchy 600 may be implemented by or in conjunction with machine 105, components of machine 105, or any combination thereof.

In some examples, a processor may execute programming and/or perform computation associated with logical hierarchy 600. For example, a compute die (e.g., memory compute die 315-a) may execute programming and/or perform computation associated with data (e.g., data associated with logical hierarchy 600). Additionally, or alternatively, a base die (e.g., a base die of stacked memory package 305) may execute programming and/or perform computation that is associated with one or more aspects of logical hierarchy 600.

Some programming models (e.g., GPU programming models) may be based on a kernel grid hierarchy that subdivides a kernel grid into thread blocks (e.g., blocks or groups of threads). Based on this kernel grid hierarchy, each computation of a kernel may be mapped to particular hardware components (e.g., specific PEs, etc.). Based on the systems and methods described herein, kernels may be executed based on a sub-grid hierarchy where a kernel grid may include multiple kernel sub grids, a given kernel sub grid may include multiple thread blocks, and a given thread block may include multiple threads.

In the illustrated example, logical hierarchy 600 may include kernel grid 605. As shown, kernel grid 605 may include one or more kernel sub grids (e.g., kernel sub grid 610, etc.). As depicted, kernel sub grid 610 may include one or more thread blocks (e.g., thread block 615, thread block 625, etc.). As shown, threads may be grouped into thread blocks. For example, thread block 615 may include one or more groups of threads (e.g., thread group 620-a, thread group 620-b, etc.). Similarly, thread block 625 may include one or more groups of threads (e.g., thread group 630-a, thread group 630-b, etc.).

Kernel grid 605 may include output data (e.g., all output data) produced or to be produced for a workload. An element in kernel grid 605 may correspond to one output. A thread of a thread group may be responsible for computing one output. For example, one thread of a thread group may be mapped to one output in kernel grid 605.

As shown, kernel grid 605 may be made up of multiple kernel sub grids. A given kernel sub grid may include multiple thread blocks. A given kernel sub grid may be executed by an HBM cube (e.g., memory compute die 315-a; as directed by an application, by an end user via the application, etc.). As shown, a thread block may be divided into multiple thread groups (e.g., 4 threads per thread group). In some cases, a microcontroller (e.g., microcontroller 415) may divide a thread block into multiple thread groups. In some cases, one or more thread groups may execute on one PE (e.g., multiple threads can run on each PE). For example, a microcontroller may assign thread group 620-a and/or thread group 620-b to a first PE, assign thread group 630-a and/or thread group 630-b to a second PE, and so on.

In some cases, thread blocks such as thread block 615 to thread block 625 may be distributed (e.g., via a microcontroller) based on round robin techniques. For example, based on an HBM cube (e.g., memory compute die 315-a) that includes 16 PEs (e.g., PE 420-a to PE 420-N; N=16), the microcontroller may configure a kernel with 16 thread blocks (e.g., 16 thread blocks including thread block 615 to thread block 625). The 16 thread blocks may be distributed by the microcontroller in a round robin fashion to the 16 PEs (e.g., thread block 0 (TB0) to process element 0 (PE0), TB1 to PE1, ... TB15 to PE15, etc.). For example, microcontroller 415 may distribute thread block 615 to PE 420-a, thread block 625 to PE 420-b, and so on.

In some cases, the microcontroller may distribute one or more thread blocks per PE (e.g., maximize the number of thread blocks per PE). For example, the microcontroller may assign a first set of 16 thread blocks (e.g., TB0 to TB15) to PE0 (e.g., PE 420-a), assign a second set of 16 thread blocks (e.g., TB16 to TB31) to PE1 (e.g., PE 420-b), and so on.

In some cases, a given HBM cube (e.g., memory compute die such as memory compute die 315-a) may be assigned an identifier (e.g., cube ID), which may be assigned by the microcontroller. In some cases, the microcontroller may distribute one or more thread blocks based on cube ID. For example, the instructions of an application may assign a first thread block to a first cube ID, a second thread block to a second cube ID, etc. Accordingly, the microcontroller may assign a given thread block to a PE based on cube ID (e.g., assign to a PE of the HBM cube with the indicated cube ID).

In some examples, visibility of memory dies (e.g., memory 410-a, memory 410-b) may be shared between HBM cubes (e.g., between memory compute dies). In some cases, the visibility of memory dies may be limited between HBM cubes (e.g., access limited to assigned memory). For example, a first HBM cube (e.g., memory compute die 315-a) may have access to a first memory (e.g., access to memory 410-a, but not memory compute die 315-b); a second HBM cube (e.g., memory compute die 315-b) may have access to a second memory (e.g., access to memory 410-b, but not memory compute die 315-a). Thus, to share data between HBM cubes, explicit memory copy operations (e.g., between HBM cubes) may be provided in the application code. In some cases, data synchronization may be performed (e.g., explicitly performed) based on application code using synchronization application programming interfaces (APIs).

In some cases, the operations associated with logical hierarchy 600 may be based on a single instruction, multiple threads (SIMT) execution model. In some cases, a scheduler of a PE (e.g., scheduler 510) may select, in conjunction with a microcontroller, which thread group to run on a PE. In some cases, a dispatcher of a PE (e.g., dispatcher 515) may select, in conjunction with a microcontroller, a thread of a thread group to run on a given compute unit (e.g., on FPU 525-a, integer unit 530-a, math 535-a, or tensor core 540-a, etc.).

In some examples, a microcontroller in a given HBM cube (e.g., microcontroller 415 in memory compute die 315-a) may select which thread blocks are executed on a given PE, dividing each thread block into thread groups, allocating memory for instruction and data for these thread groups, and starting/stopping each PE execution (e.g., in case an exception in a compute unit is detected). The microcontroller may allocate all memory resources in local memory (e.g., memory 410-a, memory 410-b, etc.) and registers used for the execution of thread groups in a given PE (e.g., for stack, heap, etc.). The microcontroller may give to each PE scheduler all information needed for the execution of thread groups (e.g., start address of instruction, stack, heap for each thread group, registers allocated for each thread group, PC, instruction size, size of heap, etc.).

In some examples, the scheduler may select a given thread group to run on a PE without a context switch (e.g., as defined for a host processor or CPU). The context (e.g., registers, stack, etc.) of a thread group may not need to be saved and restored in a given HBM SiP (e.g., stacked memory package 305). Instead, all contexts for all thread blocks may be resident at all time in the PE registers and local memory similar to a GPU. Accordingly, a given PE may have enough registers and local memory to store the context for active thread groups (e.g., all active thread groups) at a given time. In some cases, the scheduler may select the next instruction to run for a thread group without any time overhead. An instruction may be the same for every thread of a thread group (e.g., SIMT). Each thread in a thread group may operate on different data. Once the scheduler picks a thread group, the dispatcher may map each thread in the thread group to a given compute/memory unit (e.g., PE 420-b, memory 410-a), and start the execution of the instruction.

In some cases, kernel grid 610 may represent data points in the output of an operation (e.g., data points in the output of matrix multiplication). For example, if the matrix multiplication has a 3x3 matrix output, then the kernel grid may represent the 3x3 data points of the output (e.g., 3x3 kernel grid represents the operations performed for each element in the 3x3 output). Each thread of a thread block may be assigned one data point (e.g., each thread may compute one data point).

In some examples, the data that is used by a given HBM cube in the computation of a kernel sub grid may be allocated to the memory of that HBM cube. For example, microcontroller 415 may assign a thread block (e.g., thread block 615) to memory compute die 315-a. Data for execution of the threads of this thread block may be allocated to the memory of memory compute die 315-a (e.g., memory 410-a, memory 410-b, etc.) for use by one or more PEs of memory 410-a (e.g., PE 420-a, PE 420-b, etc.).

In some examples, APIs may be implemented to synchronize data sharing, data dependency, etc., between HBM cubes (e.g., between memory compute die 315-a and memory compute die 315-b, etc.). For example, when data is shared between HBM cubes, an API may be implemented to share the data. When the computation of a first HBM cube depends on a result determined by a second HBM cube, then an API may be implemented to instruct the second HBM cube to share the result with the first HBM cube (e.g., copy the result to memory of the first HBM cube, copy the result to a memory location accessible to the first HBM cube and the second HBM cube, etc.).

Including kernel sub grids in a given kernel programming hierarchy increases the options available to programmers. For example, including kernel sub grids in a kernel programming hierarchy enables a kernel sub grid to be assigned to an HBM cube. For instance, a kernel grid may include at least a first kernel sub grid and a second kernel sub grid. The first kernel sub grid may be assigned to a first HBM cube of a given HBM SiP, and the second kernel sub grid may be assigned to a second HBM cube of the HBM SiP, and so on. Accordingly, kernel sub grids enable multiple thread blocks to be assigned to a given HBM cube based on a single assignment. In some cases, a kernel grid, a kernel sub grid, or a thread block may be assigned to a given HBM cube. Based on a kernel sub grid being assigned to an HBM cube, the one or more thread blocks included in that kernel sub grid may be assigned to the one or more PEs of the HBM cube. For example, a microcontroller of the HBM cube may assign a first thread block to a first PE of the HBM cube, assign a second thread block to a second PE of the HBM cube, and so on. The first PE may then execute the threads of the first thread block, and the second PE may execute the threads of the second thread block, and so on. Once the work gets assigned to the PE, then the PE has its own scheduler to dispatch the computation tasks to the compute units (e.g., tensor cores, floating point computation units, integer computation units, arithmetic logical units, etc.). In some cases, the scheduler of a PE may order the execution of the threads to satisfy dependencies between threads.

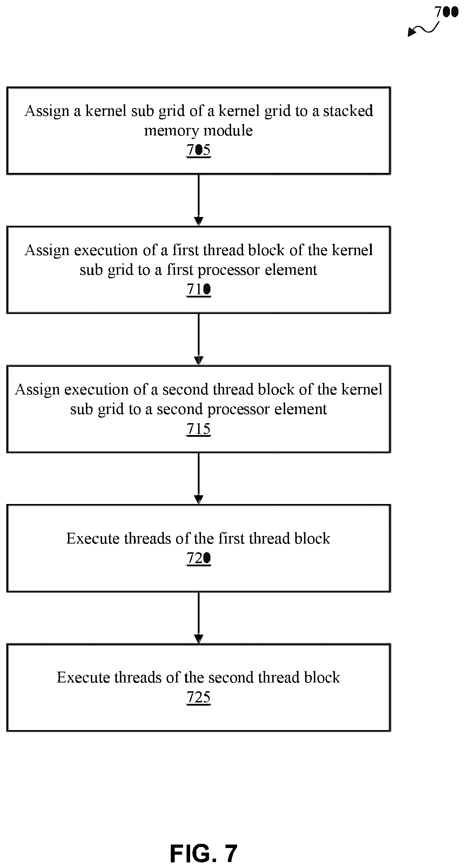

**FIG.** 7 depicts a flow diagram illustrating an example method 700 associated with the disclosed systems, in accordance with example implementations described herein. In some configurations, one or more aspects of method 700 may be implemented by or in conjunction with microcontroller 140 of FIG. 1 and/or microcontroller 230 of FIG. 2. In some configurations, one or more aspects of method 700 may be implemented by or in conjunction with machine 105, components of machine 105, or any combination thereof. The depicted method 700 is just one implementation and one or more operations of method 700 may be rearranged, reordered, omitted, and/or otherwise modified such that other implementations are possible and contemplated.

At 705, method 700 may include assigning a kernel sub grid of a kernel grid to a stacked memory module. For example, a host of a memory system in package may assign, via application code of the host, a kernel sub grid of a kernel grid to a stacked memory module.

At 710, method 700 may include assigning execution of a first thread block of the kernel sub grid to a first processor element. For example, a microcontroller of a base die of the stacked memory module may assign execution of a first thread block of the kernel sub grid to a first processor element of the stacked memory module.

At 715, method 700 may include assigning execution of a second thread block of the kernel sub grid to a second processor element. For example, the microcontroller may assign execution of a second thread block of the kernel sub grid to a second processor element of the stacked memory module.

At 720, method 700 may include executing threads of the first thread block. For example, the first processor element may execute threads of the first thread block.

At 725, method 700 may include executing threads of the second thread block. For example, the second processor element may execute threads of the second thread block.

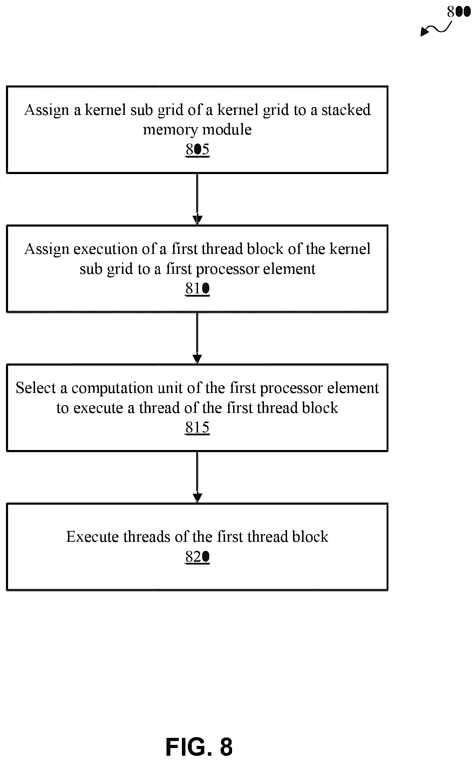

**FIG. 8** depicts a flow diagram illustrating an example method 800 associated with the disclosed systems, in accordance with example implementations described herein. In some configurations, one or more aspects of method 800 may be implemented by or in conjunction with microcontroller 140 of FIG. 1 and/or microcontroller 230 of FIG. 2. In some configurations, one or more aspects of method 800 may be implemented by or in conjunction with machine 105, components of machine 105, or any combination thereof. The depicted method 800 is just one implementation and one or more operations of method 800 may be rearranged, reordered, omitted, and/or otherwise modified such that other implementations are possible and contemplated.

At 805, method 800 may include assigning a kernel sub grid of a kernel grid to a stacked memory module. For example, a host of a memory system in package may assign, via application code of the host, a kernel sub grid of a kernel grid to a stacked memory module.

At 810, method 800 may include assigning execution of a first thread block of the kernel sub grid to a first processor element. For example, a microcontroller of a base die of the stacked memory module may assign execution of a first thread block of the kernel sub grid to a first processor element of the stacked memory module.

At 815, method 800 may include selecting a computation unit of the first processor element to execute a thread of the first thread block. For example, a dispatcher of the first processor element may select, based on a type of computation associated with the thread, one of multiple computation units of the first processor element to execute a thread of the first thread block.

At 820, method 800 may include executing threads of the first thread block. For example, the first processor element may execute threads of the first thread block, including executing the selected thread on the selected computation unit of the first processor element.

In the examples described herein, the configurations and operations are example configurations and operations, and may involve various additional configurations and operations not explicitly illustrated. In some examples, one or more aspects of the illustrated configurations and/or operations may be omitted. In some embodiments, one or more of the operations may be performed by components other than those illustrated herein. Additionally, or alternatively, the sequential and/or temporal order of the operations may be varied.

Certain embodiments may be implemented in one or a combination of hardware, firmware, and software. Other embodiments may be implemented as instructions stored on a computer-readable storage device, which may be read and executed by at least one processor to perform the operations described herein. A computer-readable storage device may include any non-transitory memory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media.

The word "exemplary" is used herein to mean "serving as an example, instance, or illustration." Any embodiment described herein as "exemplary" is not necessarily to be construed as preferred or advantageous over other embodiments. The terms "computing device," "user device ," "communication station," "station," "handheld device," "mobile device," "wireless device" and "user equipment" (UE) as used herein refers to a wired and/or wireless communication device such as a switch, router, network interface controller, cellular telephone, smartphone, tablet, netbook, wireless terminal, laptop computer, a femtocell, High Data Rate (HDR) subscriber station, access point, printer, point of sale device, access terminal, or other personal communication system (PCS) device. The device may be wireless, wired, mobile, and/or stationary.

As used within this document, the term "communicate" is intended to include transmitting, or receiving, or both transmitting and receiving. Similarly, the bidirectional exchange of data between two devices (both devices transmit and receive during the exchange) may be described as 'communicating', when only the functionality of one of those devices is being claimed. The term "communicating" as used herein with respect to wired and/or wireless communication signals includes transmitting the wired and/or wireless communication signals and/or receiving the wired and/or wireless communication signals. For example, a communication unit, which is capable of communicating wired and/or wireless communication signals, may include a wired/wireless transmitter to transmit communication signals to at least one other communication unit, and/or a wired/wireless communication receiver to receive the communication signal from at least one other communication unit.

Some embodiments may be used in conjunction with various devices and systems, for example, a Personal Computer (PC), a desktop computer, a mobile computer, a laptop computer, a notebook computer, a tablet computer, a server computer, a handheld computer, a handheld device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some embodiments may be used in conjunction with one way and/or two-way radio communication systems, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multi-standard radio devices or systems, a wired or wireless handheld device, e.g., a Smartphone, a Wireless Application Protocol (WAP) device, or the like.

Some embodiments may be used in conjunction with one or more types of wireless communication signals and/or systems following one or more wireless communication protocols, for example, Radio Frequency (RF), Infrared (IR), Frequency-Division Multiplexing (FDM), Orthogonal FDM (OFDM), Time-Division Multiplexing (TDM), Time-Division Multiple Access (TDMA), Extended TDMA (E-TDMA), General Packet Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth^{™}, Global Positioning System (GPS), Wi-Fi, Wi-Max, ZigBee^{™}, Ultra-Wideband (UWB), Global System for Mobile communication (GSM), 2G, 2.5G, 3G, 3.5G, 4G, Fifth Generation (5G) mobile networks, 3GPP, Long Term Evolution (LTE), LTE advanced, Enhanced Data rates for GSM Evolution (EDGE), or the like. Other embodiments may be used in various other devices, systems, and/or networks.

Although an example processing system has been described above, embodiments of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more components of computer program instructions, encoded on computer storage medium for execution by, or to control the operation of, information/data processing apparatus. Alternatively, or in addition, the program instructions can be encoded on an artificially-generated propagated signal, for example a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (for example multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, for example an FPGA (field programmable gate array) or an ASIC (application-specific integrated circuit). The apparatus can also include, in addition to hardware, code that creates an execution environment for the computer program in question, for example code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a component, component, subroutine, object, or other unit suitable for use in a computing environment. A computer program may, but need not, correspond to a file in a file system. A program can be stored in a portion of a file that holds other programs or information/data (for example one or more scripts stored in a markup language document), in a single file dedicated to the program in question, or in multiple coordinated files (for example files that store one or more components, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, for example magnetic, magneto-optical disks, or optical disks. However, a computer need not have such devices. Devices suitable for storing computer program instructions and information/data include all forms of non-volatile memory, media and memory devices, including by way of example semiconductor memory devices, for example EPROM, EEPROM, and flash memory devices; magnetic disks, for example internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, for example a CRT (cathode ray tube) or LCD (liquid crystal display) monitor, for displaying information/data to the user and a keyboard and a pointing device, for example a mouse or a trackball, by which the user can provide input to the computer. Other kinds of devices can be used to provide for interaction with a user as well; for example, feedback provided to the user can be any form of sensory feedback, for example visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, for example as an information/data server, or that includes a middleware component, for example an application server, or that includes a front-end component, for example a client computer having a graphical user interface or a web browser through which a user can interact with an embodiment of the subject matter described herein, or any combination of one or more such back-end, middleware, or front-end components. The components of the system can be interconnected by any form or medium of digital information/data communication, for example a communication network. Examples of communication networks include a local area network ("LAN") and a wide area network ("WAN"), an inter-network (for example the Internet), and peer-to-peer networks (for example ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (for example an HTML page) to a client device (for example for purposes of displaying information/data to and receiving user input from a user interacting with the client device). Information/data generated at the client device (for example a result of the user interaction) can be received from the client device at the server.

While this specification contains many specific embodiment details, these should not be construed as limitations on the scope of any embodiment or of what may be claimed, but rather as descriptions of features specific to particular embodiments. Certain features that are described herein in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain embodiments, multitasking and parallel processing may be advantageous.

## Claims

1. A system in package, the system in package comprising:
stacked memory modules interconnected via die-to-die, D2D, connections, a stacked memory module of the stacked memory modules comprising:
a base die that includes:
a microcontroller;
a plurality of processor elements;
a shared memory to share, between the plurality of processor elements, data that is associated with processes executed by the plurality of processor elements; and
an interconnect that connects the microcontroller to the plurality of processor elements, the shared memory, and at least one memory die stacked on top of the base die.

2. The system in package of claim 1, wherein:
a programming model associated with the stacked memory modules comprises a kernel grid that includes multiple kernel sub grids, and
a kernel sub grid of the multiple kernel sub grids includes a thread block that includes at least a first group of threads and a second group of threads different from the first group of threads.

3. The system in package of claim 2, wherein a host of the system in package assigns, via application code, the kernel sub grid of the multiple kernel sub grids to the stacked memory module.

4. The system in package of claim 2 or 3, wherein the microcontroller of the stacked memory module assigns execution of the thread block of the kernel sub grid to a first processor element of the stacked memory module and assigns execution of a second thread block of the kernel sub grid to a second processor element of the stacked memory module, the second thread block including one or more groups of threads.

5. The system in package of any one of claims 1 to 4, wherein a processor element of the plurality of processor elements includes at least one of an instruction memory, a data memory, a unified data instruction memory, a scheduler to assign execution of a group of threads to the processor element, a dispatcher to select a computation unit of the processor element to execute a thread in the group of threads, a register file to store data during computation by the processor element, or an in-order execution pipeline.

6. The system in package of claim 5, wherein the computation unit of the processor element comprises at least one of a floating-point unit for floating point operations, an arithmetic logic unit for integer operations, a tensor core for general matrix multiplication, or a load store unit for load commands and store commands.

7. The system in package of any one of claims 1 to 6, wherein a first processor element of the plurality of processor elements accesses data placed in the shared memory by a second processor element of the plurality of processor elements.

8. The system in package of any one of claims 1 to 7, wherein the interconnect comprises a packet-switching interconnect that enables the microcontroller to communicate, via data packets, data or commands to the plurality of processor elements.

9. The system in package of any one of claims 1 to 8, wherein the interconnect comprises a network on chip, NoC, interconnect.

10. The system in package of any one of claims 1 to 9, wherein the system in package comprises at least one of:
an intra-server interface based on at least one of compute express link or ultra accelerator link;
an inter-server interface based on at least one of InfiniBand or ethernet; or
a host interface.

11. A method comprising:
assigning, via application code of a host of a memory system in package, a kernel sub grid of a kernel grid to a stacked memory module;
assigning, via a microcontroller of a base die of the stacked memory module, execution of a first thread block of the kernel sub grid to a first processor element of the stacked memory module;
assigning, via the microcontroller, execution of a second thread block of the kernel sub grid to a second processor element of the stacked memory module;
executing threads of the first thread block on the first processor element; and
executing threads of the second thread block on the second processor element.

12. The method of claim 11, wherein:
the kernel sub grid includes the first thread block that includes at least a first group of threads and a second group of threads different from the first group of threads, and
the kernel sub grid includes the second thread block that includes at least a third group of threads and a fourth group of threads different from the third group of threads.

13. The method of claim 12, further comprising:
selecting, via a scheduler of the first processor element, to execute the first group of threads in relation to the second group of threads based on the scheduler determining the second group of threads depends on a result of executing the first group of threads.

14. The method of claim 12 or 13, further comprising:
selecting, via a dispatcher of the first processor element, one of multiple computation units of the first processor element to execute a thread of the first group of threads based on the dispatcher determining a type of computation associated with the thread, the computation units of the first processor element comprising at least one of floating-point unit, an integer unit, an arithmetic logic unit, or a tensor core.

15. The method of claim 14, wherein the dispatcher selects the tensor core of the first processor element to execute the thread of the first group of threads based on the dispatcher determining the thread of the first group of threads is associated with matrix multiplication.
